# EUROPÄISCHE PATENTSCHRIFT

(11) **EP 0 879 562 B1**
(45) Veröffentlichungstag und Bekanntmachung des Hinweises auf die Patenterteilung: **21.11.2001**
(21) Anmeldenummer: 98102852.5
(22) Anmeldetag: 19.02.1998
(51) Int. Cl.: A23G 1/10, A23G 1/12, A23G 1/04, A23G 1/18

(54) **Verfahren und Vorrichtung zur Herstellung von Schokolade**
Method and apparatus for the production of chocolate
Procédé et installation pour la fabrication du chocolat

(30) Priorität: 24.05.1997 DE 19721791
(43) Veröffentlichungstag der Anmeldung: 25.11.1998
(73) Patentinhaber: LIPP Mischtechnik GmbH, 68309 Mannheim (DE)
(72) Erfinder: Lipp, Eberhard, Dipl.-Ing.(FH), D-67122 Altrip (DE)
(74) Vertreter: Lemcke, Rupert, Dipl.-Ing.

(56) Entgegenhaltungen:
- CH-A- 484 691
- DE-A- 2 510 708
- DE-A- 3 512 764
- DE-A- 4 218 011
- DE-A- 19 503 635
- US-A- 3 904 777
- US-A- 4 440 797
- US-A- 4 713 256
- US-A- 4 861 615
- BECKETT S T: "Industrial Chocolate Manufacture and Use" 1988 , BLACKIE & SON LTD. , LONDON , GB XP002064196 * Seite 338 - Seite 341 *

## Beschreibung

Die Erfindung betrifft ein Verfahren zur Herstellung von Schokolade, bei dem eine Charge aus Kakaomasse sowie Zucker sowie gegebenenfalls Milchpulver in einem Vormischer unter Wärmezufuhr gemischt wird, die Charge anschließend einem ersten Mahlwerk zugeführt wird und dort vorzerkleinert wird sowie danach die so erhaltene Masse in wenigstens einem Rührwerk unter Temperatursteuerung conchiert wird im wesentlichen unter Entfernung flüchtiger Bestandteile in Form von Wasser und organischer Säuren mittels eines durch das Rührwerk geleiteten Gases, insbesondere Luft, Reaktionen zwischen den organischen Bestandteilen und den reaktiven Kohlehydration der Kakaomasse bzw. der Milch zur Geschmacksentwicklung, Zugabe von Fett und Emulgatoren, insbesondere in Form von Kakaobutter und Lecithin. Dispergieren des Fettes und der Emulgatoren und Geschmackstoffe sowie schließlich Verflüssigung der Masse. Ferner betrifft die Erfindung eine Vorrichtung zur Durchführung dieses Verfahrens.

Ein derartiges Verfahren zur Schokoladenherstellung ist allgemein bekannt, weshalb dies hier im einzelnen nicht noch einmal dargestellt wird. Insbesondere sind die Temperatur- und sonstigen Arbeitsbedingungen bekannt, die für den Prozeß der Bearbeitung der Masse in dem auch als Conche bezeichneten Rührwerk Voraussetzung sind.

Ein solches Rührwerk besteht in einem bekannten Falle aus einer horizontalen Mischtrommel, in der ein elektromotorisch angetriebener Rotor mit gegebenenfalls umdrehbarer Drehrichtung angeordnet ist, auf dem im wesentlichen radial gerichtete Mischwerkzeuge zur axialen und radialen Produktbewegung axial verteilt angeordnet sind. Diese Mischwerkzeuge sind so eingerichtet, daß sie bei einer Drehrichtung des Rotors die Masse von der Mischtrommelwand abschaben, während sie bei der anderen Drehrichtung der Versalbung und Verpastung der Masse dienen. Außerdem ist der Mantel der Mischtrommel als Doppelmantel ausgeführt, dem zum Beispiel Wasser als Heiz- oder Kühlflüssigkeit zugeführt werden kann je nachdem, ob im momentanen Stadium des Conchiervorganges eine Kühlung der Masse zur Energieabfuhr oder eine Beheizung der Masse zur Aufrechterhaltung der erforderlichen Arbeitsbedingungen angezeigt ist. Schließlich ist der Innenraum des Rührwerkes mit Hilfe eines Gebläses belüftet zur Abfuhr der während des Bearbeitungsvorganges anfallenden flüchtigen Bestandteile, deren Anwesenheit bei der fertigen Schokolade unerwünscht sind.

Wie bekannt, verläuft die Schokoladenherstellung je nach Stand des Verfahrens und der rezeptbedingten Zutaten der Masse in einem Temperaturbereich zwischen 45 und 120° C. Außerdem ergeben sich Bearbeitungszeiten üblicherweise im Bereich von 8 bis 24 Stunden. Schließlich bedarf insbesondere das conchieren einer erheblichen Antriebsenergie für den Rotor des Rührwerkes nicht nur wegen der genannten Zeitdauer des Arbeitsprozeßes sondern auch im Hinblick auf die zum Mischen, Versalben und Verpasten der Masse aufzubringenden Arbeitsleistung. Dadurch ist das bekannte Verfahren langwierig und kostspielig auch im Hinblick darauf, daß eine vergleichsweise robuste und komplizierte Apparatur für eine bestimmten Schokoladenmenge über einen verhältnismäßig langen Zeitraum zum Einsatz gebracht werden muß, damit der Masse für die einzelnen Stufen des Bearbeitungsprozeßes eine genügende Verweildauer zur Verfügung steht.

Ein weiterer Nachteil des bekannten Verfahrens besteht darin, daß beim Conchieren die Entfernung der flüchtigen Bestandteile, die Entwicklung des Geschmacks und die Trocknung mit der Verflüssigung der Masse kombiniert sind. Dies zwingt zu Kompromißlösungen, da die einzelnen Teilprozeße nicht individuell gesteuert bzw. durchgeführt werden können. Andererseits kann auf diesem Wege nicht verhindert werden, daß sich die für die einzelnen Teilprozeße erforderlichen Bedingungen gegenseitig stören und somit zu Beeinträchtigungen führen, deren möglichste Vermeidung wieder in der langen Zeitdauer des Herstellungsprozeßes ihren Niederschlag findet.

So bedingt zum Beispiel die Erzielung des gewünschten Geschmakkes des Produktes wegen der dazu erforderlichen Reaktionen eine Erhöhung der Bearbeitungstemperatur, die jedoch wiederum dazu führen kann, daß die flüchtigen Bestandteile, die eventuell für die Reaktionen benötigt werden zu früh entfernt werden.

Darüber hinaus liegt beim bekannten Verfahren die halbfertige oder fertige Schokolade in der Conche als gleichmäßige Paste oder flüssige Phase vor, so daß ein Gas wie zum Beispiel Luft kaum mit der Schokoladenmasse zum Stoffaustausch in Berührung kommen kann, wodurch bestimmte Reaktionen und die Entfernung flüchtiger Bestandteile behindert werden.

Aufgabe der Erfindung ist es daher, das eingangs genannten Verfahren sowie die Vorrichtung zu dessen Durchführung dahingehend abzuwandeln, daß eine gegenseitige störende Beeinflußung einzelner Verfahrensstufen bei der Schokoladenherstellung weitestgehend vermieden und dadurch sowohl die Zeitdauer des Herstellungsprozeßes als auch die zu dessen Durchführung erforderliche Energiemenge wesentlich herabgesetzt wird. Dies soll in apparativer Hinsicht durch verhältnismäßig einfache und marktübliche Mittel ermöglicht werden.

Erfindungsgemäß ist diese Aufgabe bei dem eingangs genannten Verfahren dadurch gelöst, daß die Entfernung der flüchtigen Bestandteile sowie die Reaktionen in einem ersten Arbeitsgang durchgeführt wird, daß dann die Masse zerkleinert wird, und daß danach die Zugabe von Fett und Emulgatoren, das Dispergieren sowie die Verflüssigung der Masse in einem weiteren Arbeitsgang durchgeführt wird.

Dabei besteht grundsätzlich die Möglichkeit, die beiden Verfahrensstufen nacheinander und damit voneinander getrennt in dem Rührwerk auszuführen, wobei der Zerkleinerungsvorgang durch an sich bekannte, mit dem Rührwerk verbundene Rotor-Stator-Mühlen durchgeführt werden kann. Zweckmäßig kann es jedoch sein, daß der erste Arbeitsgang mit Hilfe wenigstens eines gesonderten, temperaturgesteuerten Mischers durchgeführt wird, daß die anschließende Zerkleinerung mit einem zweiten Mahlwerk erfolgt, und daß der weitere Arbeitsgang mit Hilfe des Rührwerkes ausgeführt wird.

Dementsprechend liegt der Erfindung der Gedanke zugrunde, den wesentlichen Teil des Verfahrens zur Schokoladenherstellung in zwei getrennt ablaufende Verfahrensstufen aufzuteilen, die sich folglich nicht mehr störend gegenseitig beeinflussen können und die außerdem nun individuell durchgeführt und gesteuert werden können. Damit ist, wie sich gezeigt hat, eine Herabsetzung der insgesamten Verfahrensdauer auf höchstens 2 bis 4 Stunden möglich, also auf wenigstens die Hälfte der niedrigesten eingangs genannten Verfahrensdauer, was zu einer entsprechend gravierenden Herabsetzung der Kosten für die Schokoladenherstellung führt.

Dies ergibt sich vor allem auch im Hinblick auf den erforderlichen Energieeinsatz, denn ein nunmehr zusätzlich verwendeter Mischer kommt als verhältnismäßig einfache Gerätschaft mit einer vergleichsweise niedrigen Antriebsleistung aus und ist über den weitaus größeren Anteil der insgesamten Verfahrenszeit im Einsatz , während das eine hohe Antriebsleistung erfordernde Rührwerk nur während des geringeren Zeitanteils am Herstellungsverfahren beteiligt ist.

Mit der nunmehr möglichen individuellen Steuerung der einzelnen Arbeitsabläufe lassen sich Prozeßbedingungen erreichen, wie sie beim bekannten Verfahren weitestgehend unmöglich waren. Dies führt dazu, daß auch bei der Auswahl der Rohrstoffe eine größere Bewegungsfreiheit gegeben ist.

Insbesondere dadurch, daß nunmehr der hauptsächliche, für das Versalben und Verpasten der Masse erforderliche Fettanteil der Masse erst am Ende des am Mischer ablaufenden Arbeitsprozeßes zugegeben wird, ist erreicht, daß sich die Kakaomasse und gegebenenfalls das Milchpulver in einer dünnen Schickt großflächig über die Oberfläche der zerkleinerten Zuckerkritstalle verteilen kann, was einen äußerst wirksamen Stoffaustausch ergibt, da die genannten dünne Schicht einen nur sehr kurzen Diffussionspfad bildet.

Ein weiterer Nachteil des bekannten Verfahrens besteht darin, daß durch die Belüftung des Rührwerkes die in der Masse befindliche, überschüssige Feuchtigkeit verhältnismäßig schnell ausgetrieben wird und mit dem der Belüftung dienenden Gasstrom in die Umgebung gelangt. Dies führt einmal zu einer Beeinträchtigung der Umgebung durch ein unangenehm riechendes Gas. Zum anderen fehlt aber auch alsbald ein erheblicher Wasseranteil, der ansich insbesondere bei der Herstellung von Milchschokolade die Reaktionen für die Geschmacksentwicklung und somit für den Geschmack der fertigen Schokolade günstig beeinflussen kann.

Auch diesem Nachteil kann nunmehr auf der Grundlage des vorstehend geschilderten Wesens der Erfindung in einfacher Weise dadurch begegnet werden, daß in Weiterbildung des erfindungsgemäßen Verfahrens vorgesehen ist, daß das durch den Mischer geleitete Gas in einem geschlossenen Kreislauf geführt wird, daß in diesem Kreislauf während des ersten Arbeitsganges das Gas nach dem Austritt aus dem Mischer zur Entfernung der flüchtigen Bestandteile durch Kondensation abgekühlt und danach das Gas vor dem Eintritt in den Mischer wieder erhitzt und mit Wasser zur Kompensation des Wasserverlustes der Masse angereichert wird, und daß am Ende des ersten Arbeitsganges die Wasserzugabe unterbrochen und der Wassergehalt der Masse auf das für die fertige Schokolade erfoderliche Maß abgesenkt wird.

Auf diese Weise besteht also die Möglichkeit, den Wassergehalt der Masse während des ersten Arbeitsganges aufrecht zu erhalten oder gar in geeigneter Weise durch Steuerung zu beeinflussen in Richtung auf einen möglichst effektiven Verlauf der im ersten Arbeitsgang stattfindenden Reaktionen. Erst am Schluß des ersten Arbeitsganges findet dann die erforderliche Trocknung statt, was innerhalb kürzester Zeit bewerkstelligt werden kann.

Der Ablauf des ersten Arbeitsganges bei aufrechterhaltenem Feuchtigkeitsgrad kann zwar zu geringfügigen Agglomarationen einzelner Teilchen der Masse führen. Dies bedeutet jedoch keinerlei Probleme, da die Masse nach Durchführung des ersten Arbeitsganges dem Rührwerk auf dem Wege über ein zweites Mahlwerk zugeführt wird. Durch dieses Mahlwerk werden dann auch gegebenenfalls vorhandene vergrößerte Teilchen wieder zerkleinert.

Während des ersten Arbeitsganges hatte, wie vorstehend geschildert, die Masse keinen durch Zugabe entstandenen Fettanteil, da dieser für die geschilderten Diffussionsvorgänge nur hinderlich gewesen wäre. Vielmehr ergab sich ein gewisser unvermeidbarer Fettanteil nur durch das in der Kakaomasse und ggf. dem Milchpulver ohnehin enthaltene Fett. Davon ausgehend kann es aber zweckmäßig sein, daß der Masse am Ende des ersten Arbeitsganges Fett zugegeben wird. Dieses Fett kann den ersten Arbeitsgang nicht mehr stören. Andererseits ist zu Beginn des zweiten Arbeitsganges zumindest eine erste Fettzugabe für das Versalben und Verpasten der Masse erforderlich.

Beim Conchieren erfordert das Versalben und Verpasten der Masse zu Beginn dieses Arbeitsganges zunächst einen hohen Energieaufwand, um die notwendigen Scherkräfte einleiten zu können. Hier ist dann auch eventuell eine Kühlung des Rührwerkes zum Austrag der durch die Scherung erzeugten Wärme erforderlich. Hat die Versalbung und Verpastung der Masse einen gewissen Grad erreicht, so nimmt die Viskosität der Masse ab und der Conchiervorgang läuft über längere Zeit bei weiter abnehmender Viskosität der Masse bis zu deren Verflüssigung aus.

Da dieses Auslaufen des zweiten Arbeitsganges bis zur Verflüssigung der Masse wegen der nunmehr verhältnismäßig geringen Scherwirkung an den Mischwerkzeugen verhältnismäßig viel Zeit in Anspruch nimmt und damit das Rührwerk entsprechend nur teilweise ausgenutzt ist. nat es sich als vorteilhaft erwiesen, daß die endgültige Verflüssigung der Masse in einem dem weiteren Arbeitsgang nachgeschalteten dritten Arbeitsgang mittels eines Mischers hoher Scherwirkung durchgeführt wird. Hier wird also die Masse zu einem gegebenen Zeitpunkt des zweiten Arbeitsganges in einen gesonderten Mischer übergeben, der auf eine äußerst hohe Scherwirkung ausgelegt ist und folglich die Verflüssigung der Masse innerhalb kürzester Zeit bewerkstelligen kann, so daß die Conche vorzeitig wieder für die Bearbeitung der nächsten Charge einer Schokoladenmasse zur Verfügung steht.

Die zur Durchführung der beschriebenen Verfahrens geeignete Vorrichtung gestaltet sich entsprechend den gemachten Angaben erfindungsgemäß im wesentlichen gegenüber der bekannten Vorrichtung dadurch. daß dem ersten Mahlwerk wenigstens ein temperaturgesteuerter Mischer zur Entfernung der flüchtigen Bestandteile und Durchführung der Reaktionen der Masse nachgeschaltet ist, daß sich an den Mischer ein zweites Mahlwerk anschließt, und daß dem zweiten Mahlwerk das Rührwerk nachgeschaltet ist zum Dispergieren sowie zur Verflüssigung der Masse.

Dabei ist in Weiterbildung vorgesehen, daß dem Mischer ein geschlossener Gaskreislauf parallel geschaltet ist, daß dieser nach seinem Anschluß zum Austritt des im Mischer befindlichen Gases aus dem Mischer einen Gaskühler mit Kondensatablaß aufweist, danach eine Strecke zum Wiedererwärmen des Gases auf eine für den Verfahrensablauf günstige Temperatur sowie vor dem Anschluß zum Wiedereintritt des Gases in den Mischer eine Ein- und Abschaltbare Vorrichtung zur dosierten Zugabe von Wasser zur Kompensation des Wasserverlustes der Masse, und daß im Gaskreislauf ein Gebläse zur Erzeugung des umlaufenden Gasstromes angeordnet ist.

Ferner kann hier vorgesehen sein, daß die Dosiervorrichtung für das Wasser eine Heizung zur Verdampfung des Wassers aufweist.

Was das dem Mischer nachgeordnete zweite Mahlwerk betrifft, so ist dies zweckmäßig in einem Fünfwalzenstuhl.

Schließlich kann vorgesehen sein, daß dem Rührwerk ein Mischer hoher Scherwirkung zur endgültigen Verflüssigung der Masse nachgeschlaltet ist.

Soweit vorstehend insbesondere im Zusammenhang mit dem ersten Arbeitsgang von einem Gas zur Belüftung des Mischers gesprochen wurde kann dies im einfachsten Falle natürlich Luft sein. Nachgetragen sei jedoch, daß dadurch, daß nunmehr das Gas im geschlossenen Kreislauf geführt wird, auch noch die Möglichkeit besteht, ein anderes oder anderst zusammengesetztes Gas gegebenenfalls mit besonderen Beimischungen zu verwenden, um den ersten Arbeitsgang innerhalb des Mischers positiv zu beeinflussen oder zu fördern.

Weitere erfindungswesentliche und Einzelheiten ergeben sich aus der nachfolgenden Beschreibung des Erfindungsgegenstandes anhand einer Ausführungsform, die auf der Zeichnung dargestellt ist. In der Zeichnung zeigen:
- Figur 1: eine schematische Darstellung des erfindungsgemäßen Verfahrens;
- Figur 2: die schematischierte Darstellung eines Mischers mit geschlossenem Gaskreislauf; und
- Figur 3 bis Figur 5: ein Rührwerk bzw. eine Conche in Seitenansicht und beiden Stirnansichten.

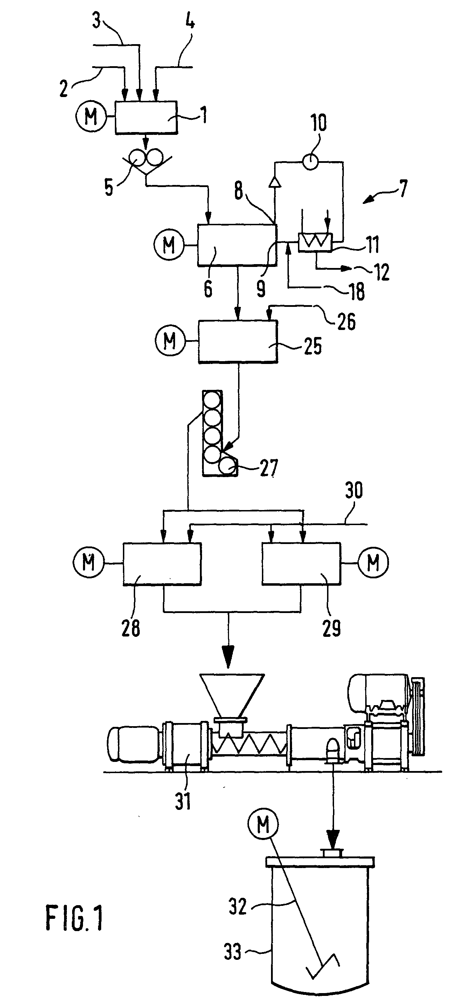

Gemäß Figur 1 wird ein Vormischer 1 zur Erstellung einer Charge zur Schokoladenherstellung mit Kakaomasse 2, Zucker 3 und gegebenenfalls Milchpulver 4 befüllt. Diese Füllung, der je nach Rezept noch weitere kleine Mengen an reaktiven Kohlehydraten und Geschmacksstoffen zugegeben sein können, wird in dem beheizten Vormischer bei einer Temperatur im Bereich von 45 bis 100° C sorgfältig gemischt. Danach durchläuft die Mischung ein Zwei-Rollen-Mahlwerk 5, um die in der Mischung enthaltenen Feststoffe zu zerkleinern.

Vom Mahlwerk 5 aus gelangt die so gebildete Charge in einen Mischer 6, durch dessen Betrieb sichergestellt ist, daß die Bestandteile gut vermischt bleiben und die Kakaomasse und gegebenenfalls das Milchpulver sich fein über die gesamte Oberfläche der Zuckerteilchen verteilt.

Während des hier stattfindenden Mischvorganges werden die flüchtigen Bestandteile der Masse im wesentlichen in Form von Wasser und organischen Säuren unter Wärmezufuhr ausgetrieben und durch ein der Belüftung dienendes Gas abgeführt.

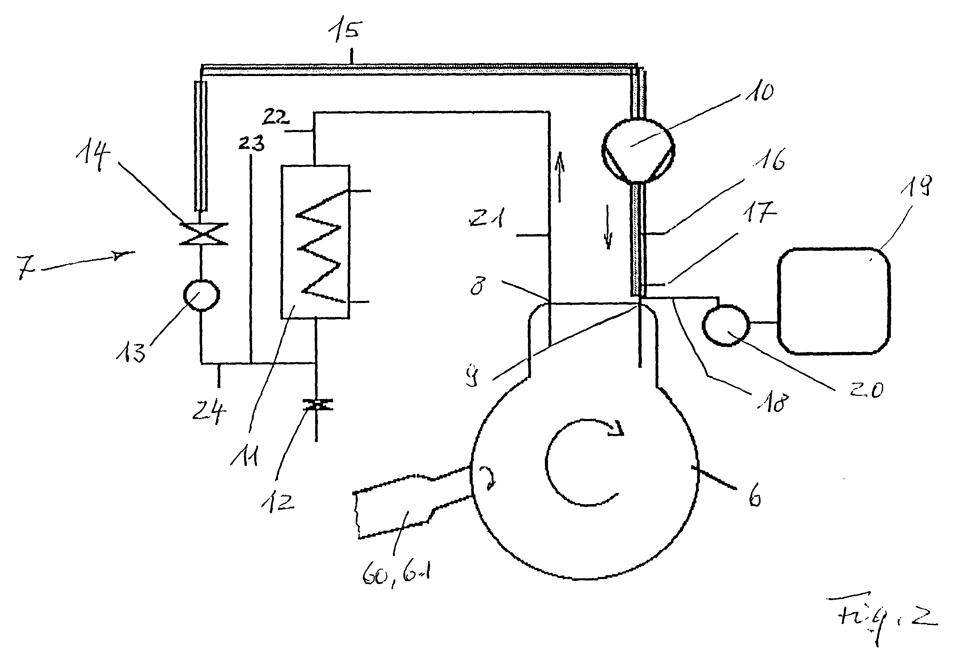

Dieses Gas läuft, wie auch aus Figur 2 ersichtlich, in einem geschlossenen Kreislauf 7 zwischen einem Austritt 8 und einem Eintritt 9 am Mischer 6. Innerhalb des Kreislaufes 7 befindet sich ein Gebläse 10 zur Erzeugung der Gaszirkulation sowie ein Gaskühler 11 mit Kondensatablaß 12, in welchem das Gas heruntergekühlt wird, damit die von ihm aufgenommenen flüchtigen Bestandteile der bearbeiteten Masse kondensieren und fortgenommen werden können.

Im Anschluß an den Gaskühler 11 gelangt das Gas über ein der Steuerung dienendes Anemometer 13 und eine Drossel 14 in eine Heizstrecke 15, in der das Gas wieder auf eine für den Verfahrensablauf günstige Temperatur gebracht wird. Am Schluß der Heizstrecke 15 befinden sich ein Fühler 16 zur Druckmessung und ein Fühler 17 zur Temperaturmessung sowie schließlich ein Wasserzutritt 18 zur Erhöhung der Feuchtigkeit des Gases auf das erforderliche Maß, das durch eine gesteuerte Feindosierpumpe 19 bestimmt wird. Damit das Wasser dem Gas in Dampfform beigemischt werden kann ist im Wasserzulauf eine entsprechende Heizvorrichtung 20 vorgesehen.

Im Zusammenhang mit Figur 2 sind noch ersichtlich ein weiterer Sensor 21 zur Druckmessung, Sensoren 22, 23 zur Durchführung einer Gasanalyse sowie ein Sensor 24 zur Temperaturmessung.

Der Ablauf des mit Hilfe des Mischers 6 durchgeführten ersten Arbeitsganges ist im einzelnen in der vorstehenden Beschreibungseinleitung geschildert, weshalb hier auf eine Wiederholung dieses Vortrages verzichtet wird. Wie dort gesagt, wird der erste Arbeitsgang mit einer Herabsetzung der Feuchtigkeit der Masse beendet, was in einfacher Weise dadurch geschehen kann, daß die Dosierpumpe 19 abgeschaltet wird.

Wie ebenfalls bereits geschildert, kann der Masse am Schluß des ersten Arbeitsganges Fett zur Vorbereitung der weiteren Verarbeitung zugegeben werden. Dies kann durch entsprechende Beschickung des Mischers 6 geschehen. Beim Beispiel der Figur 1 ist dafür jedoch eine einfache Mischvorrichtung 25 vorgesehen, in die die vom Mischer 6 kommende Masse sowie Fett 26 beispielsweise in Form von Kakaobutter zugegeben und kurz gemischt werden, bevor sie auf ein weiteres Mahlwerk 27 in Form eines Fünfwalzenstuhls gelangen. Im Mahlwerk 27 wird die Masse fein zerkleinert, um dann auf zwei gleich ausgebildete und gleich arbeitende Rührwerke bzw. Conchen 28, 29 verteilt zu werden, wo die Masse gegebenenfalls unter weiterer Zugabe 30 von Geschmacksstoffen, Lecithin und Kakaobutter versalbt, verpastet und verflüssigt wird, wie dies ebenfalls in der Beschreibungseinleitung im einzelnen ausgeführt wurde.

Um den letzten Teil der Verflüssigung der Masse zeitlich zu verkürzen und die Rückwerke 28, 29 wieder für weitere Chargen der Schokoladenmasse freizumachen, kann diesen noch ein Mischer 31 hoher Scherwirkung nachgeschaltet sein zur endgültigen Verflüssigung der Schokoladenmasse, von wo aus dann die Schokoladenmasse in einen mit einem Rührwerk 32 versehenen Vorratsbehälter 33 für die weitere Verarbeitung gegeben wird.

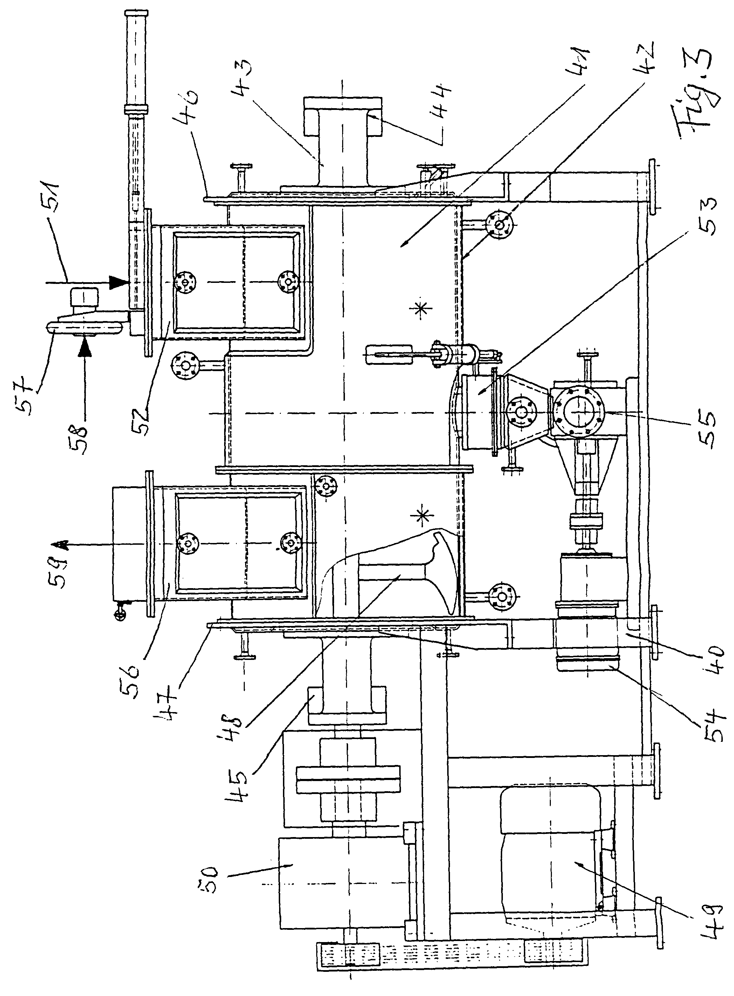

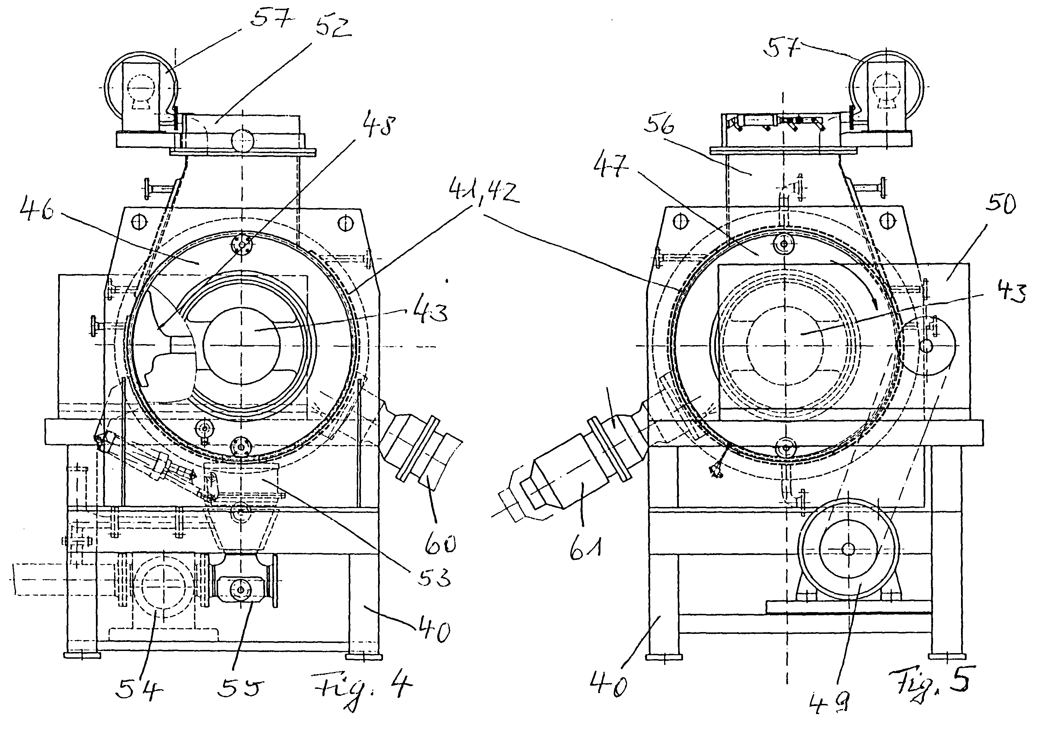

Die Figuren 3 bis 5 zeigen ein Rührwerk bzw. eine Conche in Seitenansicht (Figur 3), Stirnansicht bezogen auf Figur 3 von rechts (Figur 4) und Stirnansicht bezogen auf Figur 3 von links (Figur 5).

Dieses an sich bekannte Rührwerk weist ein Gestell 40 auf, auf das feststehend eine Rührwerkstrommel 41 montiert ist, die einen Doppelmantel 42 zur Hindurchleitung eines Heiz- bzw. Kühlmediums aufweist.

Koaxial in der Rührwerkstrommel 41 ist eine Rotorwelle 43 drehbar, die auf Böcken 44, 45 gelagert ist und Abschlußwände 46, 47 der Trommel 41 in abgedichteter Weise durchsetzt. Die Welle 43 trägt über ihre Länge verteilt Mischwerkzeuge 48 mit endständig angeordneten Werkzeugen, durch die die Masse je nach Drehrichtung der Welle 43 vom Mantel der Trommel 41 abgeschabt oder unter scherender Zusammenwirkung mit dem Mantel versalbt und verpastet werden kann.

Der Antrieb der Rotorwelle 43 erfolgt über einen Elektromotor 49 und ein Getriebe 50, durch das die Drehgeschwindigkeit der Rotorwelle 43 entsprechend den momentanen Erfordernissen des Conchiervorganges eingestellt werden kann.

Mit der Ziffer 51 ist die Zugabe der Masse über den Stutzen 52 in die Trommel 41 bezeichnet. Ist der Conchiervorgang beendet, so wird die verflüssigte Masse über einen Stutzen 53 mit Hilfe einer durch einen Motor 54 getriebenen Pumpe 55 entnommen und der weiteren Bestimmung zugeführt.

Wie ersichtlich, weist die Trommel 41 neben dem Stutzen 52 einen weiteren Stutzen 56 auf. Außerdem sitzt vor dem Stutzen 52 ein Gebläse 57, durch das dem Inneren der Trommel 41 Luft 58 zugeführt wird. die das Trommelinnere entsprechend dem Pfeil 59 über den Stutzen 56 wieder verläßt.

Diese konventionelle Belüftung des Rührwerkes dient beim vorliegenden Verfahren dazu, auch noch einen in der Masse verbliebenen Rest an flüchtigen Bestandteilen abzuführen, soweit dieser für die fertige Schokolade nicht erwünscht ist.

Wie insbesondere aus den Figuren 4 und 5 ersichtlich, sitzen an der Trommel 41 seitlich auch noch sogenannte Rotor-Stator-Mühlen 60, 61, die mit ihrem Werkzeug gegenüber den Mischwerkzeugen 48 kollisionsfrei in das Innere der Mischtrommel 41 ragen. Diese Rotor-Stator-Mühlen dienen dazu, die von den Mischwerkzeugen 48 bewegte Masse durch ihr Werkzeug durchzusetzen und dabei einer Verkleinerung der Massepartikel zu unterziehen sowie die Dispersion bzw. Emulsion der Masse herbeizuführen bzw. zu unterstützen.

Die anhand der Figuren 3 bis 5 beschriebene Vorrichtung ist wie gesagt an sich bekannt, so daß deren weiter ins einzelne gehende Beschreibung nicht erforderlich erscheint. Hingewiesen sei jedoch darauf, daß eine Vorrichtung der anhand der Figuren 3 bis 5 beschriebenen Art sich grundsätzlich auch als Mischer 6 eignet, wobei gegebenenfalls jedoch erhebliche Vereinfachungen vorgenommen werden können, die sich insbesondere aus der wegen fehlender Scherarbeit geringeren Leistungsaufnahme und der dadurch möglichen leichteren Bauweise ergeben. Die Verwendung von Rotor-Stator-Mühlen kann aber auch hier nützlich und damit zweckmäßig sein, da diese Mühlen der Zerkleinerung der Zuckerkristalle dienen können und damit der Schaffung einer größeren Oberfläche für die Kakaomasse bzw. das Milchpuolver mit den in der Beschreibungseinleitung geschilderten erhöhten Diffusionsmöglichkeiten.

Insgesamt sei zu dem gesamten erfindungsgemäßen Verfahren einschließlich der zu dessen Durchführung beschriebenen Vorrichtung schließlich darauf hingewiesen, daß dazu geeignete, zumindest im wesentlichen selbstätig arbeitende Mittel zur Steuerung und gegenseitigen Abstimmung der einzelnen Arbeitsabläufe sowohl hinsichtlich der jeweiligen Bearbeitungstemperaturen als auch der einzutragenden Energiemengen sowie der erforderlichen Zeitabläufe etc. gehören. Diese sind jedoch ebenfalls bekannt und werden daher nicht im einzelnen dargestellt und beschrieben. Ihre Ausrichtung auf den vorliegenden erfindungsgemäßen Verfahrensablauf ergibt sich aus dessen spezieller Gestaltung und läßt sich unter Berücksichtigung der bekannten Kriterien ohne weiteres vornehmen, indem im wesentlichen eine Ausrichtung auf die nunmehr erheblich kürzeren Bearbeitungszeiten erfolgt.

## Patentansprüche

1. Verfahren zur Herstellung von Schokolade, bei dem eine Charge aus Kakaomasse und Zucker sowie gegebenenfalls Milchpulver in einem Vormischer unter Wärmezufuhr gemischt wird, die Charge anschließend einem ersten Mahlwerk zugeführt und dort vorzerkleinert wird sowie danach die so erhaltene Masse in wenigstens einem Rührwerk unter Temperatursteuerung conchiert wird im wesentlichen unter Entfernung flüchtiger Bestandteile in Form von Wasser und organischer Säuren mittels eines durch das Rührwerk geleiteten Gases, insbesondere Luft, Reaktionen zwischen den organischen Bestandteilen und den reaktiven Kohlehydraten der Kakaomasse bzw. der Milch zur Geschmacksentwicklung, Zugabe von Fett und Emulgatoren insbesondere in Form von Kakaobutter und Lecithin, Dispergieren des Fettes und der Emulgatoren und Geschmackstoffe sowie schließlich Verflüssigung der Masse,
**dadurch gekennzeichnet,**
**daß** die Entfernung der flüchtigen Bestandteile sowie die Reaktionen in einem ersten Arbeitsgang durchgeführt wird, daß dann die Masse zerkleinert wird, und daß danach die Zugabe von Fett und Emulgatoren, das Dispergieren sowie die Verflüssigung der Masse in einem weiteren Arbeitsgang durchgeführt wird.

2. Verfahren nach Anspruch 1,
**dadurch gekennzeichnet,**
**daß** der erste Arbeitsgang mit Hilfe wenigstens eines gesonderten, temperaturgesteuerten Mischers (6) durchgeführt wird, daß die anschließende Zerkleinerung mit einem zweiten Mahlwerk (27) erfolgt, und daß der weitere Arbeitsgang mit Hilfe des Rührwerkes (28, 29) ausgeführt wird.

3. Verfahren nach Anspruch 1 oder 2,
**dadurch gekennzeichnet,**
**daß** das durch den Mischer (6) geleitete Gas in einem geschlossenen Kreislauf (7) geführt wird, daß in diesem Kreislauf während des ersten Arbeitsganges das Gas nach dem Austritt (8) aus dem Mischer (6) zur Entfernung der flüchtigen Bestandteile durch Kondensation (11) abgekühlt und danach das Gas vor dem Eintritt (9) in den Mischer (6) wieder erhitzt (15) und mit Wasser (18) zur Kompensation des Wasserverlustes der Masse angereichert wird, und daß am Ende des ersten Arbeitsganges die Wasserzugabe unterbrochen und der Wassergehalt der Masse auf das für die fertige Schokolade erforderliche Maß abgesenkt wird.

4. Verfahren nach einem oder mehreren der Ansprüche 1 bis 3,
**dadurch gekennzeichnet,**
**daß** der Masse am Ende des ersten Arbeitsganges Fett zugegeben wird.

5. Verfahren nach einem oder mehreren der Ansprüche 1 bis 4,
**dadurch gekennzeichnet,**
**daß** die endgültige Verflüssigung der Masse in einem dem weiteren Arbeitsgang nachgeschalteten dritten Arbeitsgang mittels eines Mischers (31) hoher Scherwirkung durchgeführt wird.

6. Vorrichtung zur Herstellung von Schokolade mit einem beheizbaren Mischer für eine Charge aus Kakaomasse und Zucker sowie gegebenenfalls Milchpulver, einem diesem nachgeschalteten ersten Mahlwerk und wenigstens einem danach angeordneten temperaturgesteuerten Rührwerk zum Conchieren der Masse, insbesondere zur Durchführung des Verfahrens nach einem oder mehreren der Ansprüche 1 bis 5,
**dadurch gekennzeichnet,**
**daß** dem ersten Mahlwerk (5) wenigstens ein temperaturgesteuerter Mischer (6) zur Entfernung der flüchtigen Bestandteile und Durchführung der Reaktionen der Masse nachgeschaltet ist, daß sich an den Mischer (6) ein zweites Mahlwerk (27) anschließt, und daß dem zweiten Mahlwerk (27) das Rührwerk (28, 29) nachgeschaltet ist zum Dispergieren sowie zur Verflüssigung der Masse.

7. Vorrichtung nach Anspruch 6,
**dadurch gekennzeichnet,**
**daß** dem Mischer (6) ein geschlossener Gaskreislauf (7) parallel geschaltet ist, daß dieser nach seinem Anschluß (8) zum Austritt des im Mischer (6) befindlichen Gases aus dem Mischer (6) einen Gaskühler (11) mit einem Kondensatablaß (12) aufweist, danach eine Strecke (15) zum Wiedererwärmen des Gases auf die dem inneren des Mischers (6) entsprechende Temperatur sowie vor dem Anschluß (9) zum Wiedereintritt des Gases in den Mischer (6) eine ein- und abschaltbare Vorrichtung (19) zur dosierten Zugabe von Wasser (18) zur Kompensation des Wasserverlustes der Masse, und daß im Gaskreislauf ein Gebläse (10) zur Erzeugung des umlaufenden Gasstromes angeordnet ist.

8. Vorrichtung nach Anspruch 7,
**dadurch gekennzeichnet,**
**daß** die Dosiervorrichtung (19) für das Wasser eine Heizung (20) zur Verdampfung des Wassers aufweist.

9. Vorrichtung nach einem oder mehreren der Ansprüche 6 bis 8,
**dadurch gekennzeichnet,**
**daß** das zweite Mahlwerk ein Fünfwalzenstuhl (27) ist.

10. Vorrichtung nach einem oder mehreren der Ansprüche 6 bis 9,
**dadurch gekennzeichnet,**
**daß** dem Rührwerk (28, 29) ein Mischer (31) hoher Scherwirkung zur endgültigen Verflüssigung der Masse nachgeschaltet ist.

## Claims

1. Process for the preparation of chocolate, in which a charge of cocoa mass and sugar and optionally milk powder is mixed, with supply of heat, in a premixer, the charge is then conveyed to a first grinding mechanism where it is subjected to preliminary comminution and the resulting mass is then conched in at least one stirring mechanism, with the temperature being controlled, substantially with removal of volatile constituents in the form of water and organic acids by means of a gas, especially air, passed through the stirring mechanism, reactions between the organic constituents and the reactive carbohydrates of the cocoa mass and, if applicable, the milk for developing flavour, addition of fat and emulsifiers especially in the form of cocoa butter and lecithin, dispersion of the fat and of the emulsifiers and flavourings and subsequent liquefaction of the mass,
**characterised in that**
the removal of the volatile constituents and the reactions are carried out in a first operating cycle; the mass is then comminuted, and thereafter the addition of fat and emulsifiers, the dispersion and the liquefaction of the mass are carried out in a further operating cycle.

2. Process according to claim 1,
**characterised in that**
the first operating cycle is carried out with the aid of at least one separate, temperature-controlled mixer (6); the subsequent comminution is effected with a second grinding mechanism (27), and the further operating cycle is carried out with the aid of the stirring mechanism (28, 29).

3. Process according to claim 1 or 2,
**characterised in that**
the gas passed through the mixer (6) is conveyed in a closed circuit (7); **in that** circuit during the first operating cycle the gas is cooled after being discharged (8) from the mixer (6) in order to remove the volatile constituents by condensation (11), and thereafter the gas is heated again (15) before it enters (9) the mixer (6) and water (18) is added thereto to compensate for the loss of water from the mass; and at the end of the first operating cycle the addition of water is interrupted and the water content of the mass is lowered to the proportion required for the finished chocolate.

4. Process according to one or more of claims 1 to 3,
**characterised in that**
fat is added to the mass at the end of the first operating cycle.

5. Process according to one or more of claims 1 to 4,
**characterised in that**
the final liquefaction of the mass is carried out in an third operating cycle subsequent to the further operating cycle by means of a mixer (31) having a high shearing action.

6. Apparatus for the preparation of chocolate, having a heatable mixer for a charge of cocoa mass and sugar and optionally milk powder, a first grinding mechanism arranged downstream thereof and at least one temperature-controlled stirring mechanism arranged thereafter for conching the mass, especially for carrying out the process according to one or more of claims 1 to 5,
**characterised in that**
downstream of the first grinding mechanism (5) there is arranged at least one temperature-controlled mixer (6) for removing the volatile constituents and for carrying out the reactions of the mass; the mixer (6) is followed by a second grinding mechanism (27), and downstream of the second grinding mechanism (27) there is arranged the stirring mechanism (28, 29) for dispersing and for liquefying the mass.

7. Apparatus according to claim 6,
**characterised in that**
a closed gas circuit (7) is connected in parallel with the mixer (6); the gas circuit (7) has, downstream of its connection (8) for discharging from the mixer (6) the gas present in the mixer (6), a gas cooler (11) having a condensate outlet (12), thereafter a zone (15) for reheating the gas to the temperature corresponding to the interior of the mixer (6) and, upstream of the connection (9) for the re-entry of the gas into the mixer (6), a device (19), which can be switched on and off, for the metered addition of water (18) to compensate for the loss of water from the mass; and in the gas circuit there is arranged a fan (10) for generating the circulating stream of gas.

8. Apparatus according to claim 7,
**characterised in that**
the metering device (19) for the water has a heating device (20) for evaporating the water.

9. Apparatus according-to one or more of claims 6 to 8,
**characterised in that**
the second grinding mechanism is a five-cylinder mill (27).

10. Apparatus according to one or more of claims 6 to 9,
**characterised in that**
downstream of the stirring mechanism (28, 29) there is arranged a mixer (31) having a high shearing action for the final liquefaction of the mass.

## Revendications

1. Procédé pour la fabrication de chocolat dans le cas duquel une charge constituée d'une masse de cacao et de sucre, ainsi qu'éventuellement de poudre de lait, est mélangée dans un prémélangeur avec apport de chaleur, la charge est amenée ensuite dans un premier broyeur et y est préconcassée, ensuite la masse ainsi obtenue est raffinée dans au moins un mélangeur à température contrôlée, essentiellement par élimination des composants volatils sous forme d'eau et d'acides organiques au moyen d'un gaz, notamment de l'air, conduit à travers le mélangeur, par réactions entre les composants organiques et les hydrates de carbone réactifs de la masse de cacao ou du lait pour le développement du goût, par adjonction de graisse et d'émulsifiants notamment sous forme de beurre de cacao et de lécithine, par dispersion de la graisse et des émulsifiants et des exhausteurs de goût ainsi que finalement par liquéfaction de la masse, **caractérisé en ce que** l'élimination des composants volatils ainsi que les réactions sont réalisées dans une première étape de travail, qu'ensuite la masse est concassée, et qu'ensuite l'adjonction de graisse et d'émulsifiants, la dispersion et la liquéfaction de la masse sont réalisées lors d'une autre étape de travail.

2. Procédé selon la revendication 1, **caractérisé en ce que** la première étape de travail est réalisée à l'aide d'au moins un mélangeur (6) à part à température contrôlée, **en ce que** le concassage suivant est réalisé avec un deuxième broyeur (27), et **en ce que** l'autre étape de travail est réalisée à l'aide du mélangeur (28, 29).

3. Procédé selon la revendication 1 ou 2, **caractérisé en ce que** le gaz conduit à travers le mélangeur (6) est guidé dans un circuit (7) fermé, **en ce que** le gaz, après sa sortie (8) du mélangeur (6), est refroidi par condensation (11) dans ce circuit pendant la première étape de travail pour l'élimination des composants volatils, et qu'ensuite le gaz est réchauffé (15) avant son entrée (9) dans le mélangeur (6) et enrichi avec de l'eau (18) pour compenser la perte d'eau de la masse, et **en ce qu**'à la fin de la première opération, l'adjonction d'eau est interrompue et la teneur en eau de la masse est ramenée à la mesure nécessaire au chocolat fini.

4. Procédé selon l'une ou plusieurs des revendications 1 à 3, **caractérisé en ce que** la graisse est ajoutée à la masse à la fin de la première étape de travail.

5. Procédé selon l'une ou plusieurs des revendications 1 à 4, **caractérisé en ce que** la liquéfaction définitive de la masse est réalisée dans une troisième étape de travail succédant à l'autre étape de travail, au moyen d'un mélangeur (31) à haut effet de cisaillement.

6. Dispositif pour la fabrication de chocolat avec un mélangeur chauffable pour une charge constituée de masse de cacao et de sucre ainsi qu'éventuellement de poudre de lait, avec un premier broyeur placé après celui-ci et au moins un mélangeur à température contrôlée placé en aval pour raffiner la masse, notamment pour l'exécution du procédé selon l'une ou plusieurs des revendications 1 à 5, **caractérisé en ce qu'**au moins un mélangeur (6) à température contrôlée est placé après le premier broyeur (5) pour l'élimination des composants volatils et la réalisation des réactions de la masse, **en ce qu'**un second broyeur (27) est raccordé directement au mélangeur (6), et **en ce que** le mélangeur (28, 29) est placé après le deuxième broyeur (27) pour la dispersion ainsi que pour la liquéfaction de la masse.

7. Dispositif selon la revendication 6, **caractérisé en ce qu'**un circuit de gaz (7) fermé est commuté parallèlement au mélangeur (6), **en ce que** celui-ci présente, derrière son raccord d'entrée (8), un appareil de refroidissement des gaz (11) avec une évacuation d'eau condensée (12), pour la sortie du gaz se trouvant dans le mélangeur (6), qu'il présente ensuite un parcours (15) pour le réchauffement du gaz à la température correspondant à l'intérieur du mélangeur (6) ainsi qu'un dispositif (19) pouvant être ouvert et fermé, devant le raccord d'entrée (9) pour la rentrée du gaz dans le mélangeur (6) pour l'adjonction dosée d'eau (18) pour la compensation de la perte d'eau de la masse, et **en ce qu'**un ventilateur (10) est placé dans le circuit du gaz pour créer le jet continu de gaz.

8. Dispositif selon la revendication 7, **caractérisé en ce que** le dispositif de dosage (19) de l'eau présente un chauffage (20) pour la vaporisation de l'eau.

9. Dispositif selon l'une ou plusieurs des revendications 6 à 8, **caractérisé en ce que** le second broyeur est un moulin à cinq rouleaux (27).

10. Dispositif selon l'une ou plusieurs des revendications 6 à 9, **caractérisé en ce qu'**un mélangeur (31) à haut effet de cisaillement est placé après le mélangeur (28, 29) pour la liquéfaction définitive de la masse.
